# EUROPÄISCHE PATENTANMELDUNG

(11) **EP 4 803 780 A1**
(43) Veröffentlichungstag der Anmeldung: **09.09.2026**
(21) Anmeldenummer: 25162299.9
(22) Anmeldetag: 07.03.2025
(51) Int. Cl.: F16H 57/00, F16D 1/06, F16D 1/08, F16H 57/021, F16H 57/022

(54) **GETRIEBEWELLENANORDNUNG**

(71) Anmelder: Flender GmbH, 46395 Bocholt (DE); Flender Industriegetriebe GmbH, 09322 Penig (DE)
(72) Erfinder: JOSTEN, Guido, 46395 Bocholt (DE)
(74) Vertreter: Michalski Hüttermann & Partner mbB

(57) **Zusammenfassung**

Getriebewellenanordnung 10 für ein Industriegetriebe 54, mit einem Gehäuseelement 12, einem in dem Gehäuseelement 12 drehbar gelagerten Wellenelement 14 mit einer Wellenachse A_{W}, zumindest einem auf das Wellenelement 14 aufgesetzten und in einer ersten axialen Richtung der Wellenachse A_{W} zumindest mittelbar gegenüber dem Wellenelement 14 festgesetzten Verzahnungselement 16, einem mehrteiligen, endseitig des Wellenelements 14 angeordneten Antriebsadapter 18, wobei das Verzahnungselement 16 zumindest mittelbar über den Antriebsadapter 18 in einer zweiten axialen Richtung gegenüber dem Wellenelement 14 festgesetzt ist und wobei der Antriebsadapter 18 auf der von dem Wellenelement 14 abgewandten Endbereich eine Antriebsschnittstelle 22 zum Drehantrieb einer an das Gehäuseelement 12 angesetzten Einheit 24 ausbildet. Mit der Getriebewellenanordnung 10 ist möglich, die Vorspannung des Verzahnungselements 16 und den Antrieb der anzutreibenden Einheit 24 an ein Wellenende anzubauen, da der Antriebsadapter 16 beide Funktionalitäten übernimmt.

## Beschreibung

Die Erfindung betrifft eine Getriebewellenanordnung für ein Industriegetriebe, mit ein Gehäuseelement, einem in dem Gehäuseelement drehbar gelagertes Wellenelement mit einer Wellenachse A_{W}, einem auf das Wellenelement aufgesetztes und in einer ersten axialen Richtung der Wellenachse A_{W} zumindest mittelbar gegenüber dem Wellenelement festgesetztes Verzahnungselement und einem endseitig des Wellenelements angeordneten Antriebsadapter, zum Drehantrieb einer an das Gehäuseelement angesetzten Einheit.

Getriebewellenanordnungen sind bekannt, bei denen auf dem einen axialen Ende über einen Antriebsadapter eine an das Gehäuseelement angesetzte Einheit angetrieben wird und auf dem anderen axialen Ende eine Vorspannung auf die auf dem Wellenelement befindlichen Teile, beispielsweise ein Verzahnungselement oder ein Lagerring, gegeben wird. Somit ist jedes axiale Ende des Wellenelements mit jeweils einer Funktionalität belegt. Es besteht ein Bedürfnis das Wellenelement mit zumindest einer weiteren Funktionalität zu belegen.

Es ist die Aufgabe der Erfindung Maßnahmen aufzuzeigen, die es ermöglichen ein Wellenelement einer Getriebewellenanordnungen mit zumindest einer weiteren Funktionalität zu belegen.

Die Lösung der Aufgabe erfolgt durch eine Getriebewellenanordnungen mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Getriebewellenanordnung für ein Industriegetriebe, umfassend ein Gehäuseelement, ein in dem Gehäuseelement drehbar gelagertes Wellenelement mit einer Wellenachse A_{W}, ein auf das Wellenelement aufgesetztes und in einer ersten axialen Richtung der Wellenachse A_{W} zumindest mittelbar gegenüber dem Wellenelement festgesetztes Verzahnungselement, einen mehrteiligen, endseitig des Wellenelements angeordneten Antriebsadapter, wobei das Verzahnungselement zumindest mittelbar über den Antriebsadapter in einer zweiten axialen Richtung gegenüber dem Wellenelement festgesetzt ist und wobei der Antriebsadapter auf der von dem Wellenelement abgewandten Endbereich eine Antriebsschnittstelle zum Drehantrieb einer an das Gehäuseelement angesetzten Einheit ausbildet.

Bei dem Gehäuseelement kann es sich um ein vollständiges Getriebegehäuse oder auch nur ein Teilgehäuse handeln. Bei dem Wellenelement kann es sich um eine Getriebewelle handeln, die in herkömmlicher Weise über das Verzahnungselement einen Antrieb erfährt. Das Wellenelement kann beispielsweise über eine Kegelrollenlagerung in dem Getriebegehäuse gelagert sein. Es kann vorgesehen sein, dass das Verzahnungselement in einer axialen Richtung der Wellenachse A_{W} zumindest über einen Lagerinnenring gegenüber dem Wellenelement festgesetzt ist. Zusätzlich können hier auch ein oder mehrere Distanzelemente in Form von Hülsen vorgesehen sein. Ebenfalls können ein oder mehrere Distanzelemente in Form von Hülsen oder ein Lagerinnenring vorgesehen sein, über die das Verzahnungselement über den Antriebsadapter in der zweiten axialen Richtung gegenüber dem Wellenelement festgesetzt ist.

Mit der Getriebewellenanordnung ist es möglich, die Vorspannung des Verzahnungselements und den Antrieb der anzutreibenden Einheit an ein Wellenende anzubauen, da der Antriebsadapter beide Funktionalitäten übernimmt. Durch die Erfindung kann der Antriebsadapter nun weiterhin an die bisherige Schnittstelle der Wellenzentrierung angebaut werden und eine neue Schnittstelle für die Vorspannung zur Verfügung stellen. Das andere Wellenende ist nun freigeworden, um dort eine weitere Funktionalität vorzusehen.

In einer bevorzugten Ausgestaltung ist der Antriebsadapter zur Wellenachse A_{W} fluchtend gegenüber dem Wellenelement verschraubt. Zudem ist bevorzugt, dass der Antriebsadapter eine Spannmutter umfasst, wobei die Spannmutter auf den Antriebsadapter aufgeschraubt ist und sich zumindest mittelbar gegenüber dem Verzahnungselement abstützt. Der Antriebsadapter weist ein Außengewinde auf, über die die Spannmutter verschraubt werden kann. Über die Spannmutter kann eine Vorspannung auf das Verzahnungselement aufgebracht werden, so dass dieses spielfrei gegenüber dem Wellenelement gehalten ist und im Betrieb Axialkräfte aufnehmen kann.

In einer außerdem bevorzugten Ausgestaltung ist zwischen der Spannmutter und dem Wellenelement eine Passscheibe vorgesehen. Hierbei ist besonders bevorzugt, wenn die Passscheibe mit einer Passung auf dem Antriebsadapter sitzt. Hierbei kann es sich um eine Übergangspassung handeln. Durch die Passung wird eine saubere Zentrierung der Passscheibe auf dem Antriebsadapter gewährleistet. Damit über ein Anziehen der Spannmutter eine Vorspannung aufgebracht werden kann, ist die Passscheibe mit einem axialen Abstand zu einer Stirnfläche des Wellenelements angeordnet und ein Außendurchmesser der Passscheibe ist größer als ein Außendurchmesser der Stirnfläche des Wellenelements, um eine Anlage zwischen Passscheibe und Wellenelement zu gewährleisten.

In einer weiterhin bevorzugten Ausgestaltung weist die Antriebsschnittstelle ein formschlüssiges Schnittstellenprofil, insbesondere einen in axialer Richtung verlaufenden Radialschlitz, ein positives oder negatives Sechskant- oder Sternprofil auf.

Zudem ist bevorzugt, dass das Verzahnungselement beispielsweise als Tellerrad oder als Stirnrad, insbesondere schrägverzahnt, ausgebildet ist.

Bevorzugt umfasst das Gehäuseelement ein Getriebegehäuse und zumindest einen an einer Außenseite des Getriebegehäuses gehaltenen Lagerdeckel, wobei der Antriebsadapter außerhalb eines durch das Getriebegehäuse umschlossenen Volumens, insbesondere zumindest teilweise außerhalb des durch den Lagerdeckel umschlossenen Volumens, angeordnet ist. Die an das Gehäuseelement angesetzte Einheit kann als Ölpumpe, Wasserpumpe, Geschwindigkeitssensor o.ä. ausgeführt sein.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine Industrie-Applikation in Form eines Antriebsstrangs mit Industriegetriebe,
Fig. 2: eine Detaillierung einer Getriebewellenanordnung für eine Industriegetriebe und
Fig. 3: eine weitere Detaillierung der Getriebewellenanordnung nach Fig. 2.

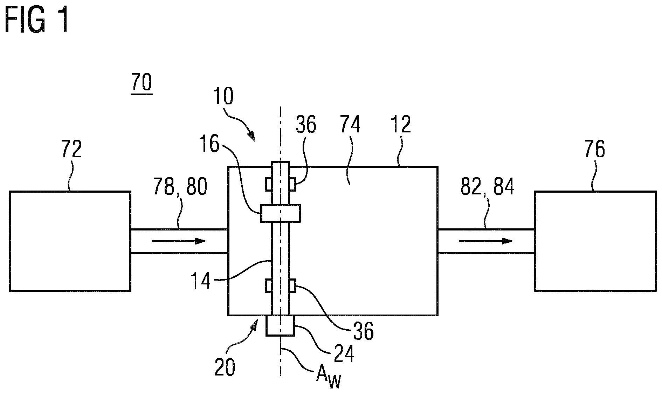

Die Figur 1 zeigt eine Industrie-Applikation 70 in Form eines Antriebsstrangs. Die Industrie-Applikation 70 umfasst ein Antriebsmittel 72, das beispielsweise als Elektromotor, als Verbrennungsmotor oder als Hydraulikmotor ausgebildet ist. Das Antriebsmittel 72 ist drehmomentübertragend mit einem Industriegetriebe 74 gekoppelt, das wiederum mit einer mechanischen Anwendung 76 verbunden ist. Das Antriebsmittel 72 ist zum Abgeben einer Antriebsleistung 78 ausgebildet, die über eine Leistungswelle 80 dem Getriebe 74 zugeführt wird. Durch das Getriebe 74 wird die eingehende Antriebsleistung 78, unter Berücksichtigung von Reibungsverlusten, bezüglich Drehzahl und Drehmoment gewandelt und als Ausgangsleistung 62 über eine Leistungswelle 84 an die mechanische Anwendung 76 weitergeleitet. Das Getriebe 74 kann beispielsweise als Stirnradgetriebe oder als Kegelstirnradgetriebe ausgeführt sein.

Mit dem Bezugszeichen 10 ist eine Getriebewellenanordnung bezeichnet. Die Getriebewellenanordnung 10 ist in einem Gehäuseelement 12 des Getriebes 74 über eine Lagerung 36 um eine Wellenachse A_{W} drehbar gelagert und umfasst ein Wellenelement 14 und ein auf diesem drehfest gehaltenes Verzahnungselement 16, das beispielsweise als Tellerrad oder als Stirnrad, insbesondere schrägverzahnt, ausgebildet sein kann. Das Wellenelement 14 ist über das Verzahnungselement 16 mit der antreibenden Leistungswelle 80 antriebsverbunden, was aber vorliegend keiner weiteren Beschreibung und Darstellung bedarf. Mit dem Bezugszeichen 24 ist eine durch die Getriebewellenanordnung 10 angetriebene Einheit, beispielsweise eine Ölpumpe, bezeichnet, wobei die Einheit von außen an das Gehäuseelement 12 angeflanscht sein kann.

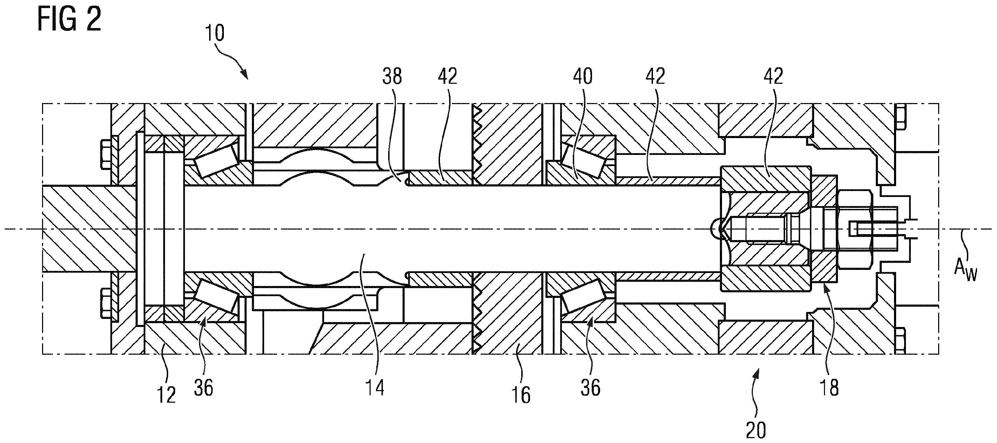

Die Figur 2 zeigt eine Detaillierung der Getriebewellenanordnung 10. Zu erkennen ist das in der Lagerung 36 drehbar gehaltene Wellenelement 14. Bei der Lagerung 36 handelt es sich vorliegend um eine Kegelrollenlagerung in X-Anordnung, wobei sie auch anders ausgeführt sein kann. Eine Lagervorspannung für die Lagerung 36 wird mit den herkömmlichen Mitteln gewährleistet, die vorliegend keiner Beschreibung bedürfen.

Das Wellenelement 14 bildet eine Radialschulter 38 aus und endseitig des Wellenelements 14 ist ein mehrteiliger Antriebsadapter 18 angeordnet. Der Antriebsadapter 18 ist zur Wellenachse A_{W} fluchtend gegenüber dem Wellenelement 14 verschraubt. In der Figur 2 ist zu erkennen, dass axial zwischen der Radialschulter 38 und dem Antriebsadapter 18 das Verzahnungselement 16, ein Lagerinnenring 40 der Lagerung 36 und mehrere Distanzelemente 42 unter einer Vorspannung gehalten sind, so dass hierüber das Verzahnungselement 16 in einer definierten und festen Axialposition festgelegt ist und während eines Betriebs Axialkräfte aufnehmen kann.

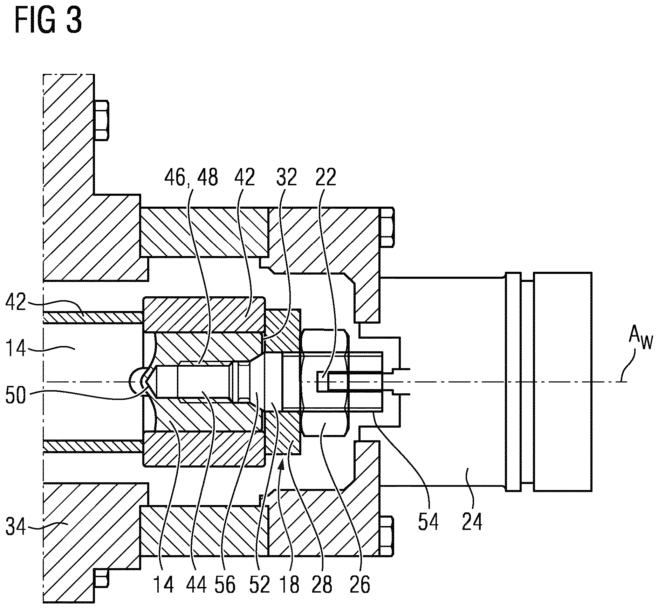

Die Figur 3 zeigt eine Detaillierung des endseitig des Wellenelements 14 angeordneten Antriebsadapters 18. Zudem ist die angetriebene Einheit 24 dargestellt, die an einen Lagerdeckel 34 des - nicht dargestellten - Gehäuseelements 12 angesetzt ist. Der Antriebsadapter 18 bildet einen ersten Abschnitt 44 aus, der ein Außengewinde 46 aufweist und der über das Außengewinde 46 in eine mit Innengewinde 48 versehene Bohrung 50 des Wellenelements 14 eingeschraubt ist. Der Antriebsadapter 18 bildet ferner einen zweiten Abschnitt 52 aus, der ebenfalls ein Außengewinde 54 aufweist. Der erste Abschnitt 44 geht über einen konischen Abschnitt 56 in den zweiten Abschnitt 52 über. Der Antriebsadapter 18 weist eine Spannmutter 26 auf, die auf das Außengewinde 54 des zweiten Abschnitts 52 aufgeschraubt ist. Ferner umfasst der Antriebsadapter 18 eine Passscheibe 28, die beispielsweise über eine Übergangspassung zentriert auf dem zweiten Abschnitt 52 sitzen kann. Die Spannmutter 26 stützt sich über die Passscheibe 26 zumindest mittelbar gegenüber dem Verzahnungselement 16 ab. Bei der in Figur 3 beschriebenen Ausgestaltung stützt sich die Spannmutter 26 über die Passscheibe 28, die Distanzelement 42 und den Lagerinnenring 40 gegenüber dem Verzahnungselement 16 ab, vgl. Figur 2.

Damit über die Spannmutter 26 des Antriebsadapters 18, der gegenüber dem Wellenelement 14 verschraubt ist, und über die Passscheibe 28 eine Vorspannung auf das Verzahnungselement 16 bewirkt werden kann, ist die Passscheibe 28 mit einem axialen Abstand zu einer Stirnfläche 30 des Wellenelements 14 angeordnet und ein Außendurchmesser der Passscheibe 28 ist größer als ein Außendurchmesser der Stirnfläche 30 des Wellenelements 14. Über ein Anziehen der Spannmutter 26 erfolgt ein Verspannen zwischen dem Wellenelement 14, das die Radialschulter 38 umfasst, und den außen auf dem Wellenelement 14 sitzenden Teilen Distanzelemente 42, Lageninnenring 40 und Verzahnungselement 16.

Endseitig, der angetriebenen Einheit 24 zugewandt, bildet der Antriebsadapter 18 eine Antriebsschnittstelle 22 aus. Die Antriebsschnittstelle 22 ist als formschlüssiges Schnittstellenprofil ausgeführt, das vorliegend ein in axialer Richtung verlaufender Radialschlitz ist. In diesen Radialschlitz 22 greift ein entsprechend geformter Mitnehmerfinger 58 der angetriebenen Einheit 24 ein, so dass sich eine Drehung des Wellenelements 14 auf die Einheit 24 überträgt.

### Bezugszeichenliste

- 10: Getriebewellenanordnung
- 12: Gehäuseelement
- 14: Wellenelement
- 16: Verzahnungselement
- 18: Antriebsadapter
- 20: Endbereich
- 22: Antriebsschnittstelle
- 24: angetriebene Einheit
- 26: Spannmutter
- 28: Passscheibe
- 30: Stirnfläche
- 34: Lagerdeckel
- 36: Lagerung
- 38: Radialschulter
- 40: Lagerinnenring
- 42: Distanzelement
- 44: Abschnitt
- 46: Außengewinde
- 48: Innengewinde
- 50: Bohrung
- 52: Abschnitt
- 54: Außengewinde
- 56: konischer Abschnitt
- 58: Mitnehmerfinger
- 70: Industrie-Applikation
- 72: Antriebsmittel
- 74: Industriegetriebe
- 76: mechanischen Anwendung
- 78: Antriebsleistung
- 80: Leistungswelle
- 82: Ausgangsleistung
- 84: Leistungswelle

## Patentansprüche

1. Getriebewellenanordnung (10) für ein Industriegetriebe (54), umfassend ein Gehäuseelement (12),
ein in dem Gehäuseelement (12) drehbar gelagertes Wellenelement (14) mit einer Wellenachse (A_{W}),
zumindest ein auf das Wellenelement (14) aufgesetztes und in einer ersten axialen Richtung der Wellenachse (A_{W}) zumindest mittelbar gegenüber dem Wellenelement (14) festgesetztes Verzahnungselement (16),
einen mehrteiligen, endseitig des Wellenelements (14) angeordneten Antriebsadapter (18), wobei das Verzahnungselement (16) zumindest mittelbar über den Antriebsadapter (18) in einer zweiten axialen Richtung gegenüber dem Wellenelement (14) festgesetzt ist und wobei der Antriebsadapter (18) auf der von dem Wellenelement (14) abgewandten Endbereich eine Antriebsschnittstelle (22) zum Drehantrieb einer an das Gehäuseelement (12) angesetzten Einheit (24) ausbildet.

2. Getriebewellenanordnung (10) nach Anspruch 1, **dadurch gekennzeichnet, dass** der Antriebsadapter (18) zur Wellenachse (A_{W}) fluchtend gegenüber dem Wellenelement (14) verschraubt ist.

3. Getriebewellenanordnung (10) nach Anspruch 1 oder 2, **dadurch gekennzeichnet, dass** der Antriebsadapter (18) eine Spannmutter (26) umfasst, wobei die Spannmutter (26) auf den Antriebsadapter (18) aufgeschraubt ist und sich zumindest mittelbar gegenüber dem Verzahnungselement (16) abstützt.

4. Getriebewellenanordnung (10) nach Anspruch 3, **dadurch gekennzeichnet, dass** zwischen der Spannmutter (26) und dem Wellenelement (14) eine Passscheibe (28) vorgesehen ist.

5. Getriebewellenanordnung (10) nach Anspruch 4, **dadurch gekennzeichnet, dass** die Passscheibe (28) mit einem axialen Abstand zu einer Stirnfläche (30) des Wellenelements (14) angeordnet ist und ein Außendurchmesser der Passscheibe (28) größer ist als ein Außendurchmesser der Stirnfläche (30) des Wellenelements (14).

6. Getriebewellenanordnung (10) nach Anspruch 4 oder 5, **dadurch gekennzeichnet, dass** die Passscheibe (28) mit einer Passung, insbesondere einer Übergangspassung, auf dem Antriebsadapter (18) sitzt.

7. Getriebewellenanordnung (10) nach einem der Anspruche 1 bis 6, **dadurch gekennzeichnet, dass** die Antriebsschnittstelle (22) ein formschlüssiges Schnittstellenprofil, insbesondere einen in axialer Richtung verlaufenden Radialschlitz, ein positives oder negatives Sechskant- oder Sternprofil aufweist.

8. Getriebewellenanordnung (10) nach einem der Anspruche 1 bis 7, **dadurch gekennzeichnet, dass** das Verzahnungselement (16) beispielsweise als Tellerrad oder als Stirnrad, insbesondere schrägverzahnt, ausgebildet ist.

9. Getriebewellenanordnung (10) nach einem der Anspruche 1 bis 8, **dadurch gekennzeichnet, dass** das Gehäuseelement (12) ein Getriebegehäuse und zumindest einen an einer Außenseite des Getriebegehäuses (12) gehaltenen Lagerdeckel (34) umfasst, wobei der Antriebsadapter außerhalb eines durch das Getriebegehäuse (12) umschlossenen Volumen, insbesondere zumindest teilweise außerhalb des durch den Lagerdeckel (34) umschlossenen Volumens, angeordnet ist.

10. Getriebewellenanordnung (10) nach einem der Anspruche 1 bis 9, **dadurch gekennzeichnet, dass** die an das Gehäuseelement (12) angesetzte Einheit als Ölpumpe, Wasserpumpe oder Geschwindigkeitssensor ausgeführt ist.
